# EUROPEAN PATENT APPLICATION

(11) **EP 1 936 249 A2**
(43) Date of publication of application: **25.06.2008**
(21) Application number: 07123131.0
(22) Date of filing: 13.12.2007
(51) Int. Cl.: F16K 47/08

(54) **Sleeve insert**

(30) Priority: 22.12.2006 US 643929
(71) Applicant: General Electric Company, Schenectady, NY 12345 (US)
(72) Inventor: Sommerville, Daniel V., Soquel, CA 95073 (US); Pappone, Daniel C., San Jose, CA 95110 (US)
(74) Representative: Illingworth-Law, William Illingworth

(57) **Abstract**

A main flow line and relief valve assembly comprising: a main line 10 fitted with a standpipe 12; a relief valve 14 fitted within the standpipe; and a sleeve 22 inserted in the standpipe below the relief valve, with a distal end 27 of the sleeve configured to prevent aero-acoustic resonances of the deep cavity formed by the relief valve and standpipe assembly. The aero-acoustic resonance is prevented by separating the vortex shedding frequency associated with the free shear layer convecting across the mouth of the deep cavity and the acoustic cavity frequencies of the deep cavity and by disrupting the free shear layer at the mouth of the deep cavity such that the vertical structure does not remain coherent and/or does not impact upon the downstream edge of the cavity mouth.

## Description

This invention relates to the mitigation of acoustic resonances in deep cavities, found, for example, in power and process piping.

Deep cavity resonances are a common problem in power and process plant piping systems. Typically, these resonances result in premature wear of, for example, Safety and Relief Valves (SRVs) in a main steam line (MSL) or similar conduit. In the SRV example, the typical installation configuration has the SRV mounted in a standpipe fitted to the MSL, forming a deep cavity in the standpipe which is susceptible to aero-acoustic resonances. In recent years some boiling water reactor (BWR) steam dryers have experienced significant degradation as a result of acoustic loading caused by deep cavity resonances initiated in the SRVs in the MSLs. Existence of these cavity resonances has affected the ability of some BWRs to operate at optimum levels. In other cases, these resonances have caused the utility to spend significant money conducting preemptive maintenance on the affected valves during every outage.

From a theoretical perspective, the self-excited resonance in the standpipe occurs when the vortex shedding frequency of the shear layer across the branch line cavity approaches the ¼ wave organ pipe acoustic resonance of the SRV standpipe. Once the two frequencies align then the two can exhibit a "lock-on" phenomenon and create a high amplitude acoustic resonance in the standpipe. This resonance has been mitigated in practice by taking the following actions: 1. Separate the vortex shedding frequency from the organ pipe frequency at the power level of operation; and 2. Disrupt the shear layer such that the vortex shed from the upstream edge cannot remain coherent and/or cannot impinge upon the downstream edge of the cavity. Commonly used mitigation concepts are described in an article entitled "Review Self-Sustaining Oscillations of Flow Past Cavities," by D. Rockwell and E. Naudascher; Journal of Fluids Engineering, Vol. 100, June 1978.

The concepts described in this disclosure appear to be fundamentally different than those used in the past and have not been described in the literature.

### BRIEF DESCRIPTION OF THE INVENTION

The exemplary but non-limiting embodiments described herein mitigate the existence of acoustic resonances in deep cavities such as those commonly encountered in SRVs used in power and process piping industries. In one exemplary embodiment of the present invention, a sleeve is inserted into the SRV standpipe, with the remote or distal end of the sleeve projecting into the flowpath in the MSL. The sleeve accomplishes two significant changes to the combined SRV and standpipe cavity which will be hereafter described as the deep cavity. The first change is a reduction in the deep cavity diameter by the insertion of the sleeve. The second change is a disruption of the flow path of the free shear layer at the mouth of the deep cavity by having the distal end of the sleeve project into the main flowpath. The first change reduces the Strouhal number associated with the configuration which can shift the system away from resonances, if sized properly. The second change disrupts the boundary or free shear layer, which in turn disrupts the fluid resonant excitation mechanism responsible for exciting the aero-acoustic resonance in deep cavities.

The sleeve can be installed in an existing SRV configuration with minimal modifications to the valve assembly. This is desirable because the valves and standpipes are contaminated in a nuclear plant. For a non-nuclear application this ease of installation reduces critical path times for plant maintenance.

In another exemplary embodiment, the distal end of the sleeve may be cut at an angle (this is referred to herein as a "sleeve ramp"), such that the upstream side of the distal end projects into the main flowpath, while the downstream side of the distal end terminates at the inner wall surface of the MSL.

In still another exemplary embodiment, the distal end of the sleeve is formed or otherwise provided with one or more vanes or grid members extending across the distal end of the sleeve (this is referred to herein as a "grid sleeve"). In this instance, the distal end of the sleeve may be flush with the inner wall surface of the sleeve because the grid members will cause the desired disruption in boundary or free shear layer of flow in the MSL.

Accordingly, in one aspect, the invention relates to a main flow line and relief valve assembly comprising: a main line fitted with a standpipe; a relief valve fitted within the standpipe; and a sleeve inserted in the standpipe below the relief valve, with a distal end of the sleeve configured to disrupt boundary layer flow in the main line.

In another aspect, the invention relates to a method of mitigating acoustic cavity resonances in a standpipe fixed to a main line and supporting a relief valve comprising: a) inserting a sleeve in the standpipe to separate vortex shedding frequency from organ pipe frequency at a power level of operation; and b) locating the sleeve such that a distal end thereof disrupts a boundary or free shear layer of flow in the main line.

The exemplary embodiment will now be described in greater detail in connection with the accompanying drawings, in which:

FIGURE 1 is a perspective view of a main steam line fitted with a standpipe and a safety relief valve or SRV;

FIGURE 2 is a cross-section of the assembly shown in Figure 1, but with a sleeve inserted in the standpipe in accordance with an exemplary embodiment;

FIGURE 3 is an enlarged view of the standpipe, relief valve and sleeve taken from Figure 2;

Figure 4 is a side schematic of another exemplary embodiment showing a sleeve ramp inserted into the standpipe; and

Figure 5 is a side schematic of still another exemplary embodiment showing a sleeve grid inserted into the standpipe.

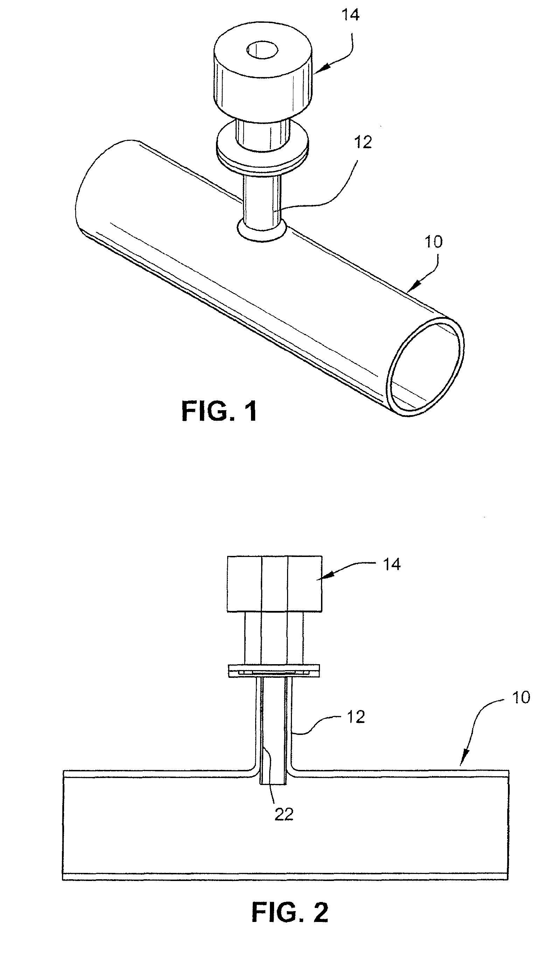

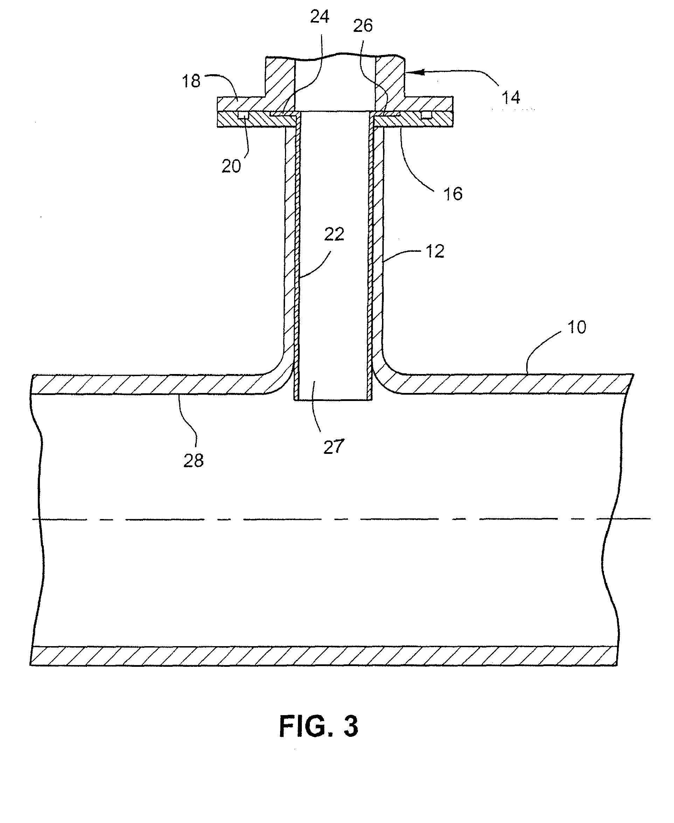

Referring to Figure 1, a main steam line (MSL) 10 is fitted in any conventional manner with a standpipe 12 extending substantially perpendicularly to the MSL. The standpipe 12, in turn, mounts a safety/relief (SRV) valve 14, also in accordance with conventional techniques. Typically, a standpipe flange 16 (welded to, or formed with, the standpipe) is engaged by a mating SRV flange 18 (Figure 3) and secured thereto by bolts (not shown) or other known means. A gasket groove 20 may be formed in the standpipe flange 16 for receiving a sealing gasket (not shown).

With particular reference to Figures 2 and 3, and in accordance with an exemplary but non-limiting embodiment, a flanged sleeve 22 is inserted within the standpipe 12, below the SRV 14. The sleeve is inserted by unbolting the SRV from the standpipe flange and sliding the sleeve into the standpipe. The SRV is then bolted to the standpipe flange. This clamps the sleeve between the standpipe flange and the SRV flange. In the above assembly process, a flange 24 of the sleeve 22 is seated within a mating groove 26 formed in the standpipe flange 16. The sleeve 22 extends downwardly, with a lower end 27 of the sleeve projecting below, or radially inward of, the inner diameter 28 of the MSL 10.

In the above example, the SRV valve body may be attached to the standpipe by means of a bolted flange. The standpipe, in turn, may be connected to the MSL through a sweepolet fitting. In an illustrative but non-limiting example, the MSL may be a 20 inch Sch. 80 pipe and the standpipe may be a six inch Sch. 80 pipe, but the invention is applicable to a wide variety of pipe and standpipe sizes.

The above-described sleeve is effective in that it separates the vortex shedding frequency from the organ pipe frequency at the power level of operation, and also disrupts the shear layer such that the vortex shed from the upstream edge cannot remain coherent and/or cannot impinge upon the downstream edge of the cavity. In other words, effectively reducing the diameter of the standpipe separates the vortex shedding frequency from the organ pipe frequency at the power level of operation by shifting the power level at which a resonance is expected to a lower level. At the same time, having the distal end of the sleeve project into the main flow shear layer disrupts the shear layer, preventing the feedback necessary to create a self-sustained oscillation.

It is desirable to minimize the clearance between the sleeve OD and the standpipe ID so that Flow Induced Vibration (FIV) displacements are minimal.

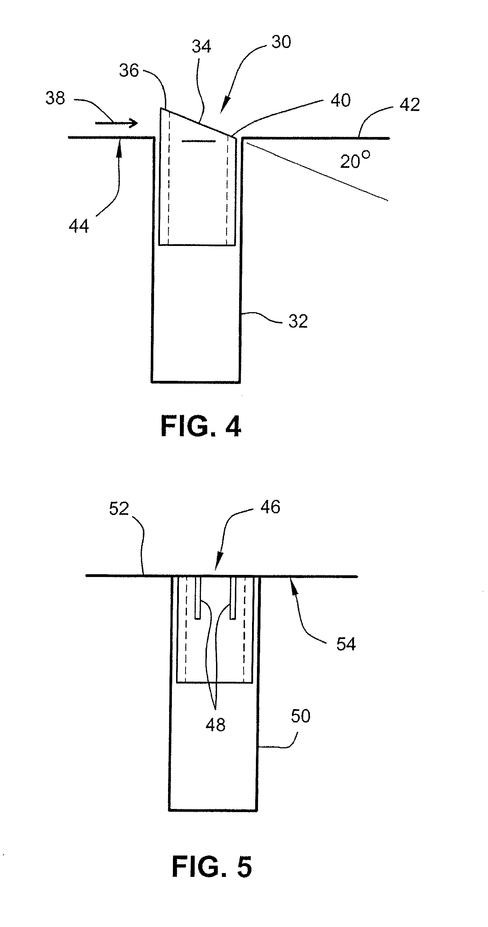

Referring now to Figure 4, an alternative, exemplary but non-limiting implementation utilizes a ramp sleeve 30 shown in schematic form, located within a standpipe 32. It will be appreciated that the sleeve 30 may be fixed within the standpipe in the same manner sleeve 22 is mounted in standpipe 12 relative to the SRV 14 (see Figure 3). In this case however, the distal end of sleeve 30 is cut at an angle, for example 20°, forming a ramp edge 34. The longer side 36 of the ramp edge projects into the main flowpath 38, while the opposite and shorter side 40 of the ramp edge may be (but need not be) flush with the inner wall surface 42 of the MSL 44. The projection of edge 36 into the flowpath is sufficient to create the desired disruption in the boundary or shear layer of the main flow. Thus, the edge 36 effectively bumps the flow out towards the center of the MSL and prevent the vortices from impinging on the downstream edge of the cavity.

Figure 5 illustrates another exemplary but non-limiting alternative sleeve construction where a grid sleeve 46 is employed for achieving the same dual purpose described in connection with the above described embodiments. In this configuration, the distal end of the sleeve 46 is fitted with one or more (two shown) ribs or grid members 48 that extend across and within the distal end of the sleeve. With this arrangement, the grid sleeve may be located in the standpipe 50 with the distal end flush with the inner wall surface 52 of the MSL 54. It has been discovered that the rib or ribs 48 cause a sufficient disruption of the boundary or free shear layer of the main flow without having to project the distal end into the flowpath.

It will be further appreciated that other constructions are contemplated so long as they meet the two criteria discusses above, i.e., separating the vortex shedding frequency from the organ pipe frequency at the power level of operation, and disrupting the shear or boundary layer of the main flow. In this regard, it will also be appreciated that the distal end of the sleeve could be retracted into the standpipe and still cause the desired boundary layer disruption. In any case the projection or retraction dimensions should be calculated to provide the desired boundary or free shear layer disruption while also minimizing mean pressure loss to bulk flow across the standpipe cavity.

## Claims

1. A main flow line and relief valve assembly comprising:
a main line 10 fitted with a standpipe 12;
a relief valve 14 fitted within the standpipe; and
a sleeve 22 inserted in the standpipe below the relief valve, with a distal end 27 of the sleeve configured to disrupt boundary layer flow in the main line.

2. The assembly of claim 1 wherein said relief valve 14 is joined to said standpipe 12 at a bolted flange joint, said sleeve formed with a radial flange 24 at a promixate end thereof, said radial flange fixed at said bolted flange joint.

3. The assembly of claim 2 wherein said radial flange 24 is sandwiched between a flange 18 on said relief valve and a flange 16 on said standpipe.

4. The assembly of claim 1 wherein an outer diameter of said sleeve 22 approximates an inner diameter of said standpipe 12.

5. The assembly of claim 1 wherein said distal end 27 of said sleeve projects radially inwardly of an interior wall surface 28 of the main line 10.

6. The assembly of claim 4 wherein said distal end of said sleeve 30 is cut at an angle.

7. The assembly of claim 1 wherein said distal end of said sleeve 46 is formed with one or more ribs 48 extending across said distal end.

8. The assembly of claim 7 wherein said distal end of said sleeve 46 is substantially flush with an inner wall surface 52 of said main line 54.

9. The assembly of claim 6 wherein a longer side 36 of said distal end projects into said main line and a shorter side 40 of said distal end is substantially flush with an inner wall surface 42 of said main line.

10. A method of mitigating acoustic cavity resonances in a standpipe fixed to a main line and supporting a relief valve comprising:
a) inserting a sleeve 22 in the standpipe 12 to separate vortex shedding frequency from organ pipe frequency at a power level of operation; and
b) locating the sleeve 22 such that a distal end 27 thereof disrupts a boundary or free shear layer of flow in the main line.
